# EUROPÄISCHE PATENTSCHRIFT

(11) **EP 4 119 779 B1**
(45) Veröffentlichungstag und Bekanntmachung des Hinweises auf die Patenterteilung: **12.02.2025**
(21) Anmeldenummer: 22178636.1
(22) Anmeldetag: 13.06.2022
(51) Int. Cl.: F01P 5/06, F01P 11/10

(54) **KÜHLVORRICHTUNG MIT ZWEI STIRNSEITIGEN VONEINANDER GETRENNT ANSTRÖMBAREN TEILFLÄCHEN**
COOLING DEVICE WITH TWO SEPARATED FRONT SURFACES
DISPOSITIF DE REFROIDISSEMENT POURVU DE DEUX SURFACES PARTIELLES À ÉCOULEMENT SÉPARÉES L'UNE DE L'AUTRE

(30) Priorität: 14.07.2021 DE 102021118148
(43) Veröffentlichungstag der Anmeldung: 18.01.2023
(73) Patentinhaber: ebm-papst Mulfingen GmbH & Co. KG, 74673 Mulfingen (DE)
(72) Erfinder: Friedlein, Florian, 74747 Ravenstein-Hüngheim (DE); Rathgeb, Josef, 73489 Jagstzell (DE); Schellmann, Lucas, 74238 Altkrautheim (DE); Jäger, Thomas, 97990 Weikersheim (DE)
(74) Vertreter: Staeger & Sperling Partnerschaftsgesellschaft mbB

(56) Entgegenhaltungen:
- FR-A2- 2 189 697
- US-A- 4 685 513
- US-A- 5 597 038
- US-A- 5 771 961
- US-A1- 2007 209 613

## Beschreibung

Die Erfindung betrifft eine Kühlvorrichtung insbesondere für Kraftfahrzeuge mit einer von Luft durchströmbaren Wärmetauschereinheit und einem unter Ausbildung eines Radialspalts an der Wärmetauschereinheit angeordneten Lüfter zur Erzeugung einer Luftströmung durch die Wärmetauschereinheit, dabei ist der Lüfter stirnseitig der Wärmetauschereinheit bzw. angrenzend an eine Stirnfläche der Wärmetauschereinheit angeordnet, sodass der Lüfter einen Teil der Stirnfläche abdeckt und diese dadurch in zwei bzw. zumindest zwei Teilflächen unterteilt ist, welche getrennt voneinander von einer Luftströmung angeströmt werden können.

Aus dem Stand der Technik ist eine Vielzahl von Kühlvorrichtungen mit einer Wärmetauschereinheit und an diesen angeordneten Lüftern bekannt, wobei eine Wärmetauschereinheit einen Wärmetauscher oder mehrere Wärmetauscher und insbesondere mehrere hintereinander angeordnete Wärmetauscher aufweisen kann. Dabei ist meist vorgesehen, dass die Lüfter einen Luftstrom durch die von Luft durchströmbare Wärmetauschereinheit erzeugt, sodass die Luft beim Durchströmen der Wärmetauschereinheit erwärmt wird und die Luft Wärme von der Wärmetauschereinheit abführt.

Hierzu werden die Lüfter meist unmittelbar benachbart zu der Wärmetauschereinheit angeordnet, sodass keine die Strömung behindernde Struktur zwischen Lüfter und Wärmetauschereinheit liegt. Dabei liegt ein solcher Lüfter jedoch meist nicht unmittelbar an der Wärmetauschereinheit an bzw. auf dieser auf, sondern ist in Axialrichtung zu der Wärmetauschereinheit versetzt bzw. beabstandet, sodass zwischen der Wärmetauschereinheit und dem Lüfter ein Radialspalt, d.h. ein in Radialrichtung geöffneter Spalt entsteht.

Durch diesen Radialspalt kann Luft aus dem Zwischenraum zwischen Lüfter und Wärmetauschereinheit ausströmen bzw. in diesen einströmen, sodass auch Luft von einer Druckseite des Lüfters (Seite auf welcher der Lüfter Luft ausbläst und mithin einen Überdruck erzeugt) zu einer Saugseite des Lüfters (Seite auf welcher der Lüfter Luft ansaugt) rückströmen kann, was in mehrfacher Hinsicht nachteilhaft ist. Diese Rückströmung der Luft kann auch als Bypassströmung bezeichnet werden.

Ist eine Bypassströmung vorhanden, sodass nicht die gesamte von dem Lüfter erzeugte Luftströmung durch den Wärmetauscher gefördert wird, muss im Vergleich zu einer Lösung mit geringerer oder keiner Bypassströmung der Lüfter mit einer höheren Leistung betrieben oder ein leistungsstärkerer Lüfter verbaut werden, was zu einem höheren Stromverbrauch und einer höheren Lautstärke im Betrieb führt.

Weiterhin kann die Luft über diesen Radialspalt erneut vom Lüfter angesaugt werden. Da bei der Bypassströmung hauptsächlich von verwirbelter Luft auszugehen ist, erzeugt dieses erneute Ansaugen zusätzlich Geräusche und führt so zu einer nachteilhaften Akustik.

Hinzukommt, dass die über die Bypassströmung erneut angesaugte Luft unter Umständen schon durch ein Entlangstreichen am Wärmetauscher erwärmt wurde, sodass ein erneutes Ansaugen der bereits erwärmten Luft zu einer verschlechterten Kühlleistung und mithin zu einem reduzierten Wirkungsgrad der Kühlvorrichtung führt.

Zur Lösung dieses Problems sind im Stand der Technik Abdeckungen bekannt, welche als "Hutzen" oder "Lufthutzen" bezeichnet werden können und welche den Lüfter zu einem Wärmetauscher bzw. einer Wärmetauschereinheit hin einhausen und den Wärmetauscher vollständig abdecken, sodass keine Luft von der Druckseite zu der Saugseite des Lüfters zurückströmen kann. Solche Hutzen werden beispielsweise durch die Schriften EP 0 098 397 A1 und AT 522 171 A4 vorgeschlagen.

Sollen solche Kühlvorrichtungen mit Hutzen jedoch in Kraftfahrzeugen verwendet werden, um beispielsweise eine Kühlung der Wärmetauschereinheit auch im Stillstand des Fahrzeugs zu ermöglichen, können die Wärmetauscher oder weitere hinter einer ersten Kühlebene der Wärmetauschereinheit liegende Kühler, wie z.B. Verbrennerkühler oder Ladeluftkühler, auch bei Fahrt nicht unmittelbar durch Fahrtwind, sondern nur über den Lüfter angeströmt werden, da die verbleibende Stirnfläche der Wärmetauschereinheit von der Hutze abgedeckt wird und nicht unmittelbar angeströmt werden kann.

Um dieses Problem zu lösen, muss der Lüfter beispielsweise ausreichend groß dimensioniert werden um eine ausreichende Kühlung sowohl ohne Fahrtwind als auch mit Fahrtwind zu garantieren, was meist wiederum zu höheren Kosten, einem höheren Energieverbrauch und einer höheren Lautstärke führt.

Zur Lösung dieses Problems schlägt beispielsweise die WO 2013/160832 A1 eine mit Klappen versehene Hutze vor, welche bei Fahrt geöffnet werden können, sodass bei Fahrt Fahrtwind durch die geöffneten Klappen durch die Wärmetauschereinheit strömen kann.

Eine solche mit beweglichen und teils sensorischen und aktorischen Elementen versehene Lösung ist jedoch aufwändig sowie verschleißbehaftet und somit ebenfalls nachteilhaft.

Weitere Kühlvorrichtungen mit von Luft durchströmbaren Wärmetauscherelementen bzw. Aspekte solcher Vorrichtungen sind zudem aus den Dokumenten US 4 685 513 A, US 5 597 038 A, FR 2 189 697 A2, US 5 771 961 A und US 2007/209613 A1 bekannt.

Der Erfindung liegt deshalb die Aufgabe zugrunde, die vorgenannten Nachteile zu überwinden und eine Kühlvorrichtung bereitzustellen, welche sowohl bei Fahrt als auch bei Stillstand eines Fahrzeugs in einfacherweise eine effiziente und ausreichende Kühlung bereitstellen kann.

Diese Aufgabe wird durch die Merkmalskombination gemäß Patentanspruch 1 gelöst.

Erfindungsgemäß wird daher eine Kühlvorrichtung insbesondere für Kraftfahrzeuge vorgesehen, welche eine von Luft durchströmbaren Wärmetauschereinheit und zumindest einen unter Ausbildung eines Radialspalts an der Wärmetauschereinheit angeordneten Lüfter zur Erzeugung einer Luftströmung durch die Wärmetauschereinheit aufweist. Die Wärmetauschereinheit weist vorzugsweise zumindest einen Wärmetauscher auf, wobei auch mehrere Wärmetauscher in Strömungsrichtung der Luft hintereinander angeordnet sein können. Dabei ist der Lüfter, welcher insbesondere und im Wesentlichen aus einem um eine Rotationsachse rotierbaren Laufrad und einem das Laufrad in Umfangsrichtung um die Rotationsachse umgebenden Gehäuse gebildet wird, welches zu der Wärmetauschereinheit hin einen Luftauslass aufweist, stirnseitig und vorzugsweise unmittelbar benachbart zu der Wärmetauschereinheit angeordnet, sodass keine eine Luftströmung zwischen Lüfter und Wärmetauschereinheit behindernde Strukturen zwischen diesen verlaufen. Da also die Wärmetauschereinheit und der Lüfter bezogen auf die Rotationsachse in Axialrichtung zueinander beabstandet sind, ohne aneinander anzuliegen, ist zwischen Wärmetauschereinheit und Lüfter ein, bezogen auf die Rotationsachse, in Radialrichtung offener Spalt gebildet, welcher als Radialspalt bezeichnet wird. Analog zu einem in Radialrichtung offenem und als Radialspalt bezeichneten Spalt, wird ein in Axialrichtung offener Spalt als Axialspalt bezeichnet. Alternativ können Radialspalt und Axialspalt dahingehend definiert werden, dass ein Axialspalt sich parallel zu der Rotationsachse erstreckt und/oder parallel zu der Rotationsachse durchströmbar ist sowie dass ein Radialspalt sich orthogonal zu der Rotationsachse erstreckt und/oder orthogonal zu der Rotationsachse durchströmbar ist. Erfindungsgemäß ist weiter vorgesehen, dass die Wärmetauschereinheit und insbesondere ein dem Lüfter nächstliegender Wärmetauscher der Wärmetauschereinheit stirnseitig eine zu dem Lüfter weisende und von Luft durchströmbare Stirnfläche aufweist, welche abschnittsweise von dem Lüfter abgedeckt ist, sodass die Stirnfläche in eine zumindest abschnittsweise von dem Lüfter abgedeckte erste Teilfläche und eine von dem Lüfter freie zweite Teilfläche geteilt ist. Wird also eine Grundfläche des Lüfters parallel der Rotationsachse auf die Stirnfläche der Wärmetauschereinheit projiziert, liegt die auf die Stirnfläche projizierte Grundfläche in der ersten Teilfläche und außerhalb der zweiten Teilfläche, wobei die zweite Teilfläche, an die erste Teilfläche angrenzt und diese beispielsweise rahmenförmig umgibt. Obgleich die erste Teilfläche gleich der auf die Stirnfläche projizierten Grundfläche sein kann, kann die erste Teilfläche auch größer sein als die auf die Stirnfläche projizierte Grundfläche. Dabei ist wesentlich, dass die erfindungsgemäße Kühlvorrichtung eine Leithülse aufweist, welche auch als Luftleithülse bezeichnet werden kann. Die Leithülse ist insbesondere in Axialrichtung, also entlang bzw. parallel der Rotationsachse durchströmbar und somit ausgebildet, Luft bzw. eine Strömung zu leiten. Weiter ist die Leithülse zwischen der Wärmetauschereinheit und dem Lüfter den Radialspalt zwischen diesen zumindest abschnittsweise verschließend angeordnet und bildet einen von einem Luftauslass des Lüfters zu der ersten Teilfläche der Stirnfläche der Wärmetauschereinheit führenden von Luft durchströmbaren Strömungskanal. Als zwischen der Wärmetauschereinheit und dem Lüfter angeordnet ist dabei zu verstehen, dass die Leithülse sich in Axialrichtung zumindest abschnittsweise zwischen der Stirnfläche der Wärmetauschereinheit und dem Lüfter erstreckt, insbesondere den Lüfter jedoch auch abschnittsweise überdecken bzw. sich mit diesem überschneiden kann. Der Radialspalt wird dabei nach radialaußen zumindest abschnittsweise von der Leithülse verschlossen bzw. überdeckt. Vorzugsweise verschließt die Leithülse den Radialspalt zwischen Wärmetauschereinheit und Lüfter vollständig. Weiter verbindet die Leithülse den Luftauslass des Lüfters strömungstechnisch mit der ersten Teilfläche der Stirnfläche und trennt den Luftauslass strömungstechnisch von der zweiten Teilfläche. Als strömungstechnisch getrennt kann dabei auch verstanden werden, wenn eine Strömung von dem Luftauslass zu der zweiten Teilfläche im Vergleich zu einer Strömung von dem Luftauslass zu der ersten Teilfläche vernachlässigbar gering und beispielsweise kleiner 5% der Strömung von dem Luftauslass zu der ersten Teilfläche ist. Daraus ergibt sich, dass die von dem Lüfter erzeugbare Luftströmung durch die Leithülse bzw. den von diesem gebildeten Strömungskanal unmittelbar auf bzw. durch die erste Teilfläche der Stirnfläche der Wärmetauschereinheit leitbar ist, eine Rückströmung von einer Druckseite an dem Luftauslass des Lüfters zu einer Saugseite des Lüfters durch den Radialspalt jedoch minimiert ist. Weiter bleibt die zweite Teilfläche der Stirnfläche der Wärmetauschereinheit vorzugsweise frei von der Leithülse und somit durchströmbar, sodass also eine von dem Lüfter unabhängige Strömung, wie beispielsweise Fahrtwind zumindest von der Leithülse ungehindert die zweite Teilfläche an- bzw. durchströmen kann.

Vorzugsweise ist die Leithülse an der Stirnfläche in bzw. an einer Grenze zwischen der ersten Teilfläche und der zweiten Teilfläche angeordnet, sodass diese durch die Leithülsen voneinander baulich getrennt sind.

Ist nicht nur lediglich ein Lüfter, sondern mehrere Lüfter vorgesehen, können diese insbesondere nebeneinander an der Wärmetauschereinheit angeordnet sein, sodass jeder Lüfter jeweils eine erste Teilfläche auf der Stirnfläche der Wärmetauschereinheit bestimmt. Hierbei ist entsprechend eine Leithülse je Lüfter vorgesehen, welche den jeweiligen Luftauslass mit der jeweiligen ersten Teilfläche verbindet.

Neben weiteren möglichen Ausbildungsformen sieht eine vorteilhafte Weiterbildung vor, dass die Leithülse hohlzylindrisch und/oder rotationssymmetrisch ausgebildet ist, wobei die Leithülse koaxial zu der Rotationsachse des Laufrades des Lüfters angeordnet ist.

Alternativ zu einer hohlzylindrischen Grundform kann die Leithülse auch trichterförmig bzw. als hohler Kegelstumpf ausgeführt sein, dessen Durchmesser sich vorzugsweise von dem Luftauslass des Lüfters zu der Stirnfläche der Wärmetauschereinheit vergrößert.

Für die Leithülse kommen grundsätzlich mehrere unterschiedliche Varianten in Betracht. Die Leithülse kann als gegenüber Wärmetauschereinheit und Lüfter separates Bauteil vorgesehen sein, welches zwischen der Wärmetauschereinheit und dem Lüfter anordenbar ist und optional die Wärmetauschereinheit und/oder den Lüfter kontaktiert. Weiter kann die Leithülse integral oder einteilig mit der Wärmetauschereinheit ausgebildet sein und sich zu dem Lüfter hin erstrecken. Alternativ kann die Leithülse integral oder einteilig mit dem Lüfter ausgebildet sein und sich zu der Wärmetauschereinheit hin erstrecken. Zudem kann auch ein erster Teil der Leithülse separat oder integral oder einteilig mit der Wärmetauschereinheit bzw. einem Wärmetauscher der Wärmetauschereinheit ausgebildet sein und ein zweiter Teil der Leithülse separat oder integral oder einteilig mit dem Lüfter ausgebildet sein, wobei der erste Teil der Leithülse und der zweite Teil der Leithülse an einander zugewandten Seiten miteinander überlappen oder aneinander anliegen.

Eine besonders vorteilhafte Variante sieht dabei vor, dass die Leithülse integral durch die Wärmetauschereinheit gebildet wird oder einteilig mit dieser verbunden ist. Dabei kann die Leithülse auch beispielsweise stoff- / form- / kraftschlüssig auf die Stirnfläche des dem Lüfter nächsten Wärmetauschers der Wärmetauschereinheit aufgebracht sein.

Dabei kann die Leithülse unmittelbar an dem Lüfter anliegen oder durch eine Beabstandung zu dem Lüfter in Axialrichtung einen Radialspalt zu dem Lüfter aufweisen oder beispielsweise durch einen größeren Innendurchmesser als der Außendurchmesser des Lüfters einen Axialspalt zu dem Lüfter aufweisen.

In einem solchen Radial- oder Axialspalt kann zudem ein den jeweiligen Spalt verschließendes Dichtelement vorgesehen sein. Weiter ist vorteilhaft, wenn eine durchströmbare Fläche des Radial- oder Axialspalts zwischen Leithülse und Lüfter kleiner ist als eine durchströmbare Fläche des Radialspalts zwischen Lüfter und der Wärmetauschereinheit, sodass also die Rückströmung der Luft von einer Druck- zu einer Saugseite des Lüfters minimiert wird.

Ist ein Dichtelement vorgesehen, kann dieses auch balg- oder schürzenartig und insbesondere in Axialrichtung flexibel bzw. deformierbar ausgebildet sein. Durch eine Bewegung des Lüfters bzw. der Leithülse in Richtung der Stirnseite der Wärmetauschereinheit kann die Schürze / der Balg / das Dichtelement elastisch gestaucht werden, sodass im Wesentlichen keine Kraft auf die Stirnseite wirkt, der Spalt zwischen Stirnseite der Wärmetauschereinheit und Leithülse jedoch weiter verschlossen bleibt.

Erfindungsgemäß weist der Lüfter wärmetauscherseitig eine in Umfangsrichtung um die Rotationsachse umlaufende Wandung auf, welche mit der Leithülse in Axialrichtung entlang der Rotationsachse überlappt, sodass die Leithülse die Wandung des Lüfters in Umfangsrichtung insbesondere vollständig umläuft bzw. umgibt oder die Wandung des Lüfters die Leithülse in Umfangsrichtung insbesondere vollständig umläuft bzw. umgibt. Die Wandung des Lüfters ist dabei Teil eines Gehäuses des Lüfters und begrenzt einen in Axialrichtung von Luft durchströmbaren Innenraum des Lüfters.

Ist vorgesehen, dass die Leithülse mit der Wandung des Lüfters überlappt und an diesem anliegt, kann an der Leithülse ein Anschlag vorgesehen sein, welche eine Verschiebbarkeit der Leithülse gegenüber dem Lüfter bzw. dessen Wandung begrenzt. Weiter können die zueinander gewandten und unmittelbar aneinander anliegenden Flächen der Leithülse und der Wandung des Lüfters als Passung und insbesondere als Übergangs- oder Presspassung ausgebildet sein, sodass die Leithülse und der Lüfter ohne weitere zwingend notwendige Befestigungsmittel sowie im Wesentlichen strömungsdicht d.h. eine Strömung verhindernd ineinandergesteckt werden können.

Weiter ist eine Variante der Kühlvorrichtung, bei welcher die Leithülse integral durch den Lüfter gebildet wird oder beispielsweise durch Kleben einteilig mit diesem verbunden ist, ebenfalls besonders vorteilhaft. Alternativ kann die Leithülse jedoch auch stoff- / kraft- oder formschlüssig mit dem Lüfter verbunden werden.

Auch hierbei kann die Leithülse unmittelbar an der Wärmetauschereinheit anliegen oder durch eine Beabstandung zu der Wärmetauschereinheit in Axialrichtung einen Radialspalt zu der Wärmetauschereinheit aufweisen. In einem solchen Radialspalt kann ebenfalls ein den Spalt verschließendes Dichtelement vorgesehen sein. Zudem ist auch hier vorteilhaft, wenn eine durchströmbare Fläche des Radialspalts zwischen Leithülse und Wärmetauschereinheit kleiner ist als eine durchströmbare Fläche des Radialspalts zwischen Lüfter und Wärmetauschereinheit, sodass die Rückströmung der Luft von einer Druck- zu einer Saugseite des Lüfters minimiert wird.

Auch in einem Radialspalt zwischen der Wärmetauschereinheit und der Luftleithülse kann ein Dichtelement wie zuvor beschrieben angeordnet sein, durch welches der Radialspalt zumindest abschnittsweise verschlossen wird.

Eine besonders vorteilhafte Variante sieht dabei vor, dass das Dichtelement als ein Balg oder eine Schürze geformt ist und ein in Axialrichtung an der Leithülse fixiertes erstes Ende sowie ein in Axialrichtung gegenüberliegendes, freies zweites Ende aufweist. Weiter ist das Dichtelement ausgebildet, von der durch den Lüfter erzeugten Luftströmung in Axialrichtung aus einer undeformierten ersten Stellung in eine deformierte zweite Stellung gestreckt zu werden, sodass der Radialspalt in der zweiten Stellung insbesondere vollständig geschlossen ist.

Beispielsweise kann das Dichtelement in seiner undeformierten Stellung einen Strömungswiderstand in bzw. an dem Strömungskanal von dem Luftauslass des Lüfters zu der Stirnseite der Wärmetauschereinheit bilden. Wird durch den Luftstrom bzw. einen bestimmungsgemäß ausreichend großen Luftstrom eine vorbestimmte Kraft an dem Abschnitt des Dichtelements aufgebracht, welcher den Strömungswiderstand bereitstellt, kann das Dichtelement deformiert und dadurch in Axialrichtung gestreckt werden. In der deformierten zweiten Stellung kann das Dichtelement auch unmittelbar an der Stirnfläche anliegen. Nimmt der Luftstrom ab, wird das Dichtelement vorzugsweise durch seine Elastizität aus der zweiten Stellung zurück in die erste Stellung gestaucht. Durch eine bestimmungsgemäß abgestimmte Elastizität und/oder Steifigkeit des Dichtelements sowie durch die Geometrie des sich in den Strömungskanal erstreckenden Abschnitts des Dichtelements ist zudem das Deformationsverhalten bzw. die Streckung in Abhängigkeit der von dem Lüfter erzeugten Luftströmung bestimmbar.

Ein solches als Balg oder Schürze ausgebildetes Dichtelement kann insbesondere durch eine Folie aus beispielsweise Kunststoff gebildet sein.

Eine vorteilhafte Weiterbildung der Kühlvorrichtung sieht zudem vor, dass die Leithülse formstabil bzw. starr und beispielsweise aus Kunststoff ist, wobei als starr bzw. formstabil verstanden wird, dass die Leithülse bei bestimmungsgemäßer Verwendung nicht verformt wird bzw. verformt werden kann.

Dabei könnte die Leithülse in einer abweichenden Ausführungsform auch zumindest abschnittsweise flexibel bzw. elastisch ausgebildet sein, was beispielsweise der Fall ist, wenn ein Dichtelement unmittelbar an einen formstabilen bzw. starren Abschnitt der Leithülse angespritzt ist.

Um eine Anbindung der Leithülse an die Wärmetauschereinheit und/oder den Lüfter zu vereinfachen sowie Kräfte großflächiger ableiten zu können, sieht eine vorteilhafte Variante der Kühlvorrichtung zudem vor, dass die Leithülse eine in Umfangsrichtung umlaufende Wandung und wärmetauscherseitig und/oder lüfterseitig einen sich in Radialrichtung über die Wandung hinaus erstreckenden Flansch aufweist. Dabei kann die Leithülse weiterhin einteilig oder insbesondere einstückig ausgebildet sein. Durch den Flansch kann eine Anbindungsfläche zum Fügen mit der angrenzenden Wärmetauschereinheit bzw. dem angrenzenden Wärmetauscher oder Lüfter bereitgestellt werden, welche größer ist, als eine Stirnfläche der Wandung der Leithülse. Über die Anbindungsfläche kann der Flansch beispielsweise stoff-, form- oder kraftschlüssig an der Stirnfläche fixiert werden.

Dabei kann sich der Flansch nach radialinnen und/oder radialaußen über die Wandung hinaus erstrecken.

Wandung und Flansch können stoffschlüssig miteinander verbunden sein, sodass der Flansch integraler Bestandteil der Leithülse ist. Alternativ kann der Flansch jedoch auch als eigenes Bauteil und separat von der Leithülse vorgesehen sein, sodass der Flansch an der Wandung der Leithülse fixiert werden muss.

Ist die Leithülse integral mit dem Lüfter ausgebildet, kann die Wandung der Leithülse zugleich die Wandung des Lüfters sein.

Eine weitere vorteilhafte Weiterbildung sieht dabei vor, dass der Flansch zu der Stirnseite hin ein Deformationselement und/oder eine Vielzahl von Borsten aufweist, durch welche der Flansch ausgebildet ist, durch die Stirnfläche in die Wärmetauschereinheit bzw. den unmittelbar benachbart zu dem Flansch angeordneten Wärmetauscher der Wärmetauschereinheit einzudringen. Dadurch kann der Flansch zum einen in einfacherweise zumindest bezüglich einer Bewegung parallel zu der Stirnfläche formschlüssig dieser bzw. der Wärmetauschereinheit fixiert und zum anderen der Radialspalt zwischen Stirnfläche und Lüfter weiter verkleinert werden. Die Borsten können dabei aus einem elastischen Material gebildet sein.

Dabei kann ein wärmetauscherseitiger Flansch nicht nur lediglich der Anbindung, sondern auch einer verbesserten Druck- bzw. Kraftverteilung auf die Wärmetauschereinheit bzw. den dem Lüfter nächsten Wärmetauscher dienen. Der Wärmetauscher kann äußerst filigran und somit empfindlich ausgebildet sein. Würde sich eine von der Leithülse auf den Wärmetauscher übertragene Kraft auf eine zu geringe Fläche - beispielsweise der Stirnfläche der Wandung - verteilen, kann der Wärmetauscher beschädigt werden. Um eine solche Beschädigung zu verhindern, kann die Kraft durch die dem Wärmetauscher zugwandte Fläche des Flansches auf eine größere Fläche im Vergleich zu einer Lösung ohne Flansch verteilt werden, sodass der auf den Wärmetauscher bzw. auf die Stirnfläche des Wärmetauschers wirkende Druck geringer ist und der Wärmetauscher dem Druck standhält bzw. standhalten kann.

Vorzugsweise kann zudem vorgesehen sein, dass die Rotationsachse des Laufrades des Lüfters koaxial zu einer zu der Stirnfläche orthogonalen Mittelachse der Wärmetauschereinheit ist, welche mittig durch die Stirnfläche verläuft, sodass also der Lüfter mittig auf der Wärmetauschereinheit angeordnet ist. Entsprechend ist also der Kühler mittig auf der Stirnfläche angeordnet. Als mittig durch die Stirnfläche verlaufend wird dabei insbesondere als durch den geometrischen Schwerpunkt der Stirnfläche verlaufend verstanden. Durch eine solche möglichst mittige Anordnung des Lüfters an der Stirnfläche bzw. eine solche möglichst mittige Fixierung des Lüfters an der Stirnfläche sollen gegenläufige Schwingungen an dem Lüfter unterdrückt bzw. verhindert werden, welche den Lüfter unzulässig stark bewegen und die Wärmetauschereinheit beschädigen können.

Beispielsweise kann es durch die Schwingungen oder allgemein Vibrationen am Lüfter zu einer Bewegung des Lüfters in Axialrichtung kommen, durch welche der Lüfter auf die Stirnfläche aufschlagen und sich in die Wärmetauschereinheit eindrücken kann.

Besonders vorteilhaft kann eine Leithülse, welche über einen Flansch an der Wärmetauschereinheit fixiert ist und unmittelbar auf der Stirnfläche aufliegt sowie einen Axialspalt zu dem Lüfter aufweist, wärmetauscherseitig ein Anschlagselement aufweisen, welches ausgebildet ist, eine maximale axiale Bewegung des Lüfters gegenüber der Leithülse zu begrenzen. Kommt es zu einer eine Axialbewegung des Lüfters verursachende Schwingung bzw. Vibration am Lüfter, kann dieser sich durch den Axialspalt gegenüber der Leithülse frei bewegen. Wird die axiale Bewegung zu groß, sodass der Lüfter in die Stirnfläche einschlagen würde, kommt der Lüfter stattdessen an dem Anlageelement der Leithülse zum Aufliegen, sodass der Lüfter nicht in die Wärmetauschereinheit einschlägt, sondern eine ansonsten beim Einschlagen unmittelbar auf die Stirnfläche wirkende Kraft über den Flansch großflächig auf die Stirnfläche abgeleitet werden kann.

Um den Lüfter an der Wärmetauschereinheit fixieren zu können, weist die Kühlvorrichtung vorzugsweise ferner ein Lüfter-Halteelement auf, welches ausgebildet ist, den Lüfter gegenüber der Wärmetauschereinheit positionsfest und den Radialspalt gegenüber dem Lüfter ausbildend zu fixieren.

Ist die Wärmetauschereinheit für die Verwendung mit einer Leithülse vorgesehen, kann die Wärmetauschereinheit und insbesondere der dem Lüfter nächste Wärmetauscher der Wärmetauschereinheit auch eine Tragestruktur aufweisen, auf welcher die Leithülse vollflächig aufliegen kann und welcher ausgebildet ist, einer von der Leithülse auf den Wärmetauscher übertragenen Kraft standzuhalten und/oder abzuleiten.

Die Leithülse kann zudem durch Federelemente federnd gegen die Stirnfläche gedrückt werden oder selbst federnd ausgebildet sein.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen ersten Stand der Technik;
- Fig. 2: Seitenansicht auf den ersten Stand der Technik;
- Fig. 3: einen zweiten Stand der Technik;
- Fig. 4: ein Ausschnitt einer ersten Ausführungsform der Kühlvorrichtung;
- Fig. 5: ein Ausschnitt einer zweiten Ausführungsform der Kühlvorrichtung;
- Fig. 6: ein Ausschnitt einer dritten Ausführungsform der Kühlvorrichtung;
- Fig. 7A: ein Ausschnitt einer Ausführungsform mit Dichtelement;
- Fig. 7B: ein Ausschnitt der Ausführungsform mit Dichtelement;
- Fig. 8: ein Ausschnitt einer Ausführungsform mit Borsten.

Die Figuren sind beispielhaft schematisch. Gleiche Bezugszeichen in den Figuren weisen auf gleiche funktionale und/oder strukturelle Merkmale hin.

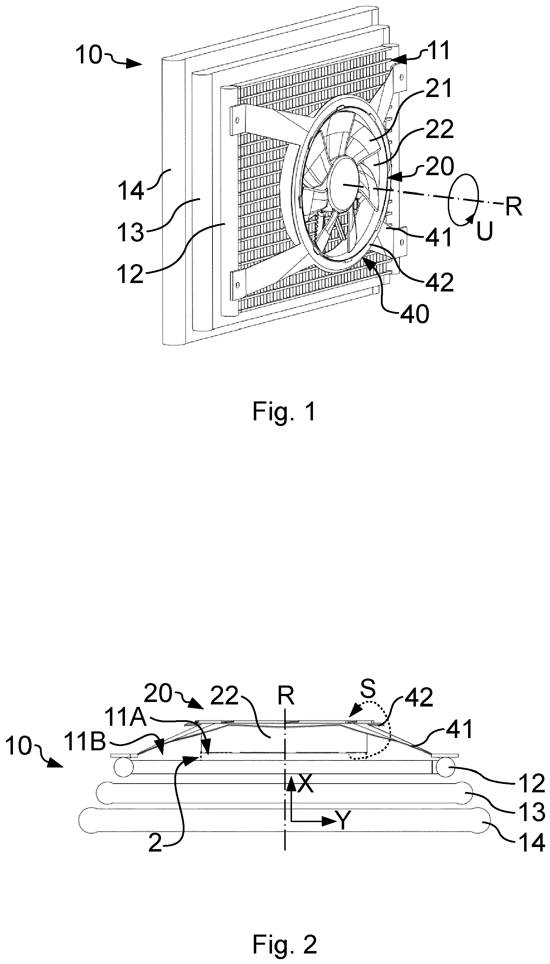

Figuren 1 und 2 zeigen eine Kühlvorrichtung für ein Kraftfahrzeug, wie sie im Stand der Technik bekannt ist und welche die Ausgangssituation für den erfindungsgemäßen Vorschlag bildet. Dabei ist die Kühlvorrichtung in Figur 1 perspektivisch und in Figur 2 in einer Seitenansicht dargestellt.

Die Wärmetauschereinheit 10 besteht beispielhaft aus mehreren Komponenten bzw. aus mehreren einzelnen Wärmetauschern und hier aus einem Kondensator 12 für eine Klimaanlage, einen Ladeluftkühler 13 und einen Wasserkühler 14. Die Wärmetauschereinheit 10 kann auch andere sowie mehr oder weniger Komponenten aufweisen, wobei zumindest ein unmittelbar zu dem Lüfter 20 benachbartes Kühlelement bzw. Wärmetauscher, hier der Kondensator 12 vorgesehen ist.

Unmittelbar benachbart zu der Wärmetauschereinheit 10 bzw. zu dem Kondensator 12, jedoch in Axialrichtung X versetzt zu diesem, also zu einer Stirnfläche 11 der Wärmetauschereinheit 10 beabstandet, ist ein Lüfter 20 angeordnet, sodass zwischen der Wärmetauschereinheit 10 und dem Lüfter 20 ein in Radialrichtung Y verlaufender Radialspalt 2 ausgebildet ist.

Der Lüfter 20, welcher auch als Ventilator bezeichnet werden kann, besteht dabei im Wesentlichen aus einem im Innenraum eines in Axialrichtung X durchströmbaren Gehäuses angeordneten, beispielsweise elektromotorisch antreibbaren Laufrad 21, welches um eine Rotationsachse R rotierbar ist, wobei die Axialrichtung X entlang bzw. parallel der Rotationsachse R verläuft.

Weiter wird der Lüfter 20 durch ein Lüfter-Halteelement 40 positionsfest gegenüber der Wärmetauschereinheit 10 gehalten. Erlaubt die umliegende Konstruktion den Lüfter 20 gegenüber der Wärmetauschereinheit 10 auf andere Art und beispielsweise an anderen Bauteilen eines Fahrzeugs positionsfest zu fixieren, kann auf ein solches Lüfter-Halteelement 40 verzichtet werden.

Das Lüfter-Halteelement 40 weist vorliegend vier (erste) Streben 41 auf, welche sich von einem den Lüfter 20 in Umfangsrichtung U um die Rotationsachse R umlaufenden Ringelement bzw. Lüfterrahmen 42 über die Stirnfläche 11 nach radialaußen erstrecken und mithin die Stirnfläche 11 überspannen.

Dabei deckt der Lüfter 20 die Stirnfläche 11 der Wärmetauschereinheit entlang der Rotationsachse R betrachtet teilweise ab, sodass die Stirnfläche 11, wie in Figur 2 gezeigt, in eine erste Teilfläche 11A und eine zweite Teilfläche 11B unterteilt wird. Dabei entspricht die erste Teilfläche 11A der auf die Stirnfläche 11 projizierte Grundfläche des Lüfters 20 und die zweite Teilfläche 11B die hier die erste Teilfläche 11A rahmenförmig umgebende verbleibende Fläche der Stirnfläche 11 der Wärmetauschereinheit 10.

Bei einer ausreichend schnellen Bewegung des Kraftfahrzeugs (Fahrt), wird die Kühlvorrichtung von einem dabei entstehenden Fahrtwind parallel zu der Rotationsachse R bzw. in Axialrichtung X angeströmt, sodass der Fahrtwind durch den in Axialrichtung X durchströmbaren Innenraum des Lüfters 20 auf die erste Teilfläche 11A und außerhalb des Lüfters 20 auf die zweite Teilfläche 11B trifft, die Wärmetauschereinheit 10 durchströmt und eine ausreichende Kühlung der Wärmetauschereinheit 10 bereitstellen kann.

Im Stillstand des Fahrzeugs sollen jedoch zumindest ein Teil der Komponenten der Wärmetauschereinheit 10 weiter gekühlt werden, um beispielsweise die Klimaanlage des Fahrzeugs auch im Stillstand betreiben oder den Motor weiter kühlen zu können. Da im Stillstand kein Fahrtwind die Wärmetauschereinheit 10 durchströmt, wird der Lüfter 20 bzw. dessen Laufrad 21 angetrieben und dadurch zumindest an der ersten Teilfläche 11A eine Luftströmung erzeugt, welche die Wärmetauschereinheit 10 durchströmt.

Aufgrund es Radialspalts 2 kommt es nun zu einer Rückströmung S von einer Druckseite zu einer Saugseite des Lüfters 20, sodass ein Teil der von dem Lüfter erzeugten Strömung als Bypassströmung bzw. Rückströmung S nicht die Wärmetauschereinheit 10 durchströmt. Zum Ausgleich dieser Rückströmung S muss ein leistungsstärkerer Lüfter 20 verwendet oder der Lüfter 20 mit höherer Drehzahl bzw. mit höherer Leistung betrieben werden, was neben der erhöhten Energieaufnahme zu einer höheren Lautstärke führt.

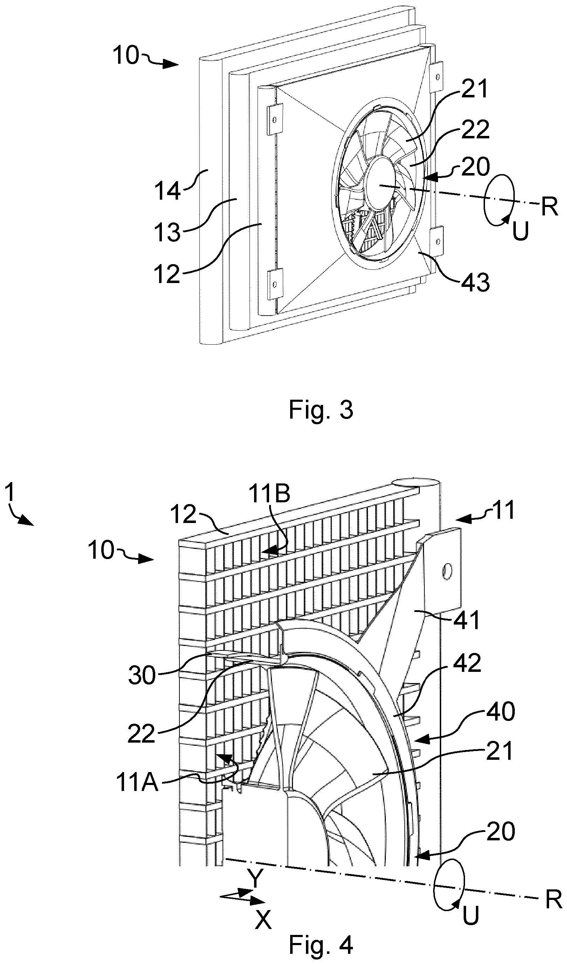

Zur Lösung dieses Problems ist im Stand der Technik eine beispielhaft in Figur 3 gezeigte Hutze 43 bekannt, durch welche die Druckseite von der Saugseite des Lüfters 20 getrennt wird, sodass als keine Rückströmung S möglich ist und die gesamte von dem Lüfter 20 erzeugte Luftströmung die Wärmetauschereinheit 10 kühlend passiert.

Dabei ist diese in Figur 3 dargestellte Lösung jedoch nur im Stillstand des Fahrzeugs vorteilhaft, da bei ausreichender Geschwindigkeit des Fahrzeugs der Fahrtwind die zweite Teilfläche 11 B nicht mehr direkt anströmen kann, sodass auch bei ausreichender Fahrt bzw. ausreichendem Fahrtwind ausschließlich eine Kühlung über eine die erste Teilfläche 11A anströmende Luftströmung bzw. durch eine den Lüfter 20 passierende Strömung möglich ist.

Dieses Problem lösende Kühlvorrichtungen 1 sind ausschnittsweise und perspektivisch in verschiedenen Ausführungsvarianten in den Figuren 4 bis 6 dargestellt, wobei jede Figur jeweils einer Variante entspricht. Der grundsätzliche Aufbau entspricht dabei dem in Figur 1 und Figur 2 Dargestellten, sodass die zugehörige Erläuterung der Figuren 1 und 2 analog für die Kühlvorrichtungen 1 gilt, wie sie in den Figuren 4 bis 6 abgebildet sind. Der wesentliche Unterschied gegenüber der Kühlvorrichtung entsprechend Figuren 1 und 2 ist dabei, dass die Kühlvorrichtungen 1 der Figuren 4 bis 6 jeweils eine Leithülse 30 aufweisen, welche den Radialspalt 2 ganz oder zumindest teilweise verschließt und dadurch eine Rückströmung S von der Druckseite des Lüfters 20 zu der Saugseite des Lüfters 20 vollständig verhindert oder zumindest minimiert.

Dabei sind in den Figuren 4 bis 6 nur jeweils die oberste bzw. die unmittelbare zu dem Lüfter 20 benachbarte Komponente (Kondensator 12) der Wärmetauschereinheit 10 dargestellt, welche die Stirnfläche 11 bildet, wobei auf der von dem Lüfter 20 abgewandten Seite der Komponente (Kondensator 12) auch weitere Ebenen bzw. Komponenten der Wärmetauschereinheit 10 vorgesehen sein können (z.B. Ladeluftkühler 13 und/oder Wasserkühler 14).

Bei der in Figur 4 gezeigten Lösung ist hierfür vorgesehen, dass die Leithülse 30 an ihrer zu der Wärmetauschereinheit 10 weisenden Seite an der Wärmetauschereinheit 10 anliegt und mit ihrer wärmetauscherseitigen Stirnfläche im Wesentlichen vollflächig auf der Stirnfläche 11 der Wärmetauschereinheit 10 bzw. der dem Lüfter nächsten Komponente aufliegt. An ihrer zu dem Lüfter 20 weisenden Seite überlappt die Leithülse 30 in Axialrichtung X abschnittsweise mit der Wandung 22 des Lüfters 20, sodass der in Axialrichtung X durchströmbare Innenraum des Lüfters 20 unmittelbar und insbesondere dicht in den von der Leithülse 30 gebildeten Strömungskanal übergeht.

Obgleich in Figur 4 vorgesehen ist, dass die Leithülse 30 mit einer radialinneren Fläche an einer radialäußeren Fläche der Wandung 22 des Lüfters 20 anliegt, kann alternativ auch vorgesehen sein, dass die Leithülse 30 mit einer radialäußeren Fläche an einer radialinneren Fläche der Wandung 22 des Lüfters 20 anliegt. Weiter können an der radialinneren Fläche und/oder der radialäußeren Fläche der Leithülse 30 und/oder der Wandung 22 die Überlappung und Verschiebbarkeit der Leithülse 30 an dem Lüfter 20 begrenzende Anschläge vorgesehen sein.

In Figur 4 kann die Leithülse 30 beispielsweise ortsfest an der Wärmetauschereinheit 10 fixiert und der Lüfter 20 gegenüber der Leithülse 30 beweglich oder ortsfest an dem Lüfter 20 fixiert und gegenüber der Wärmetauschereinheit 10 beweglich sein.

Weiter kann die Leithülse 30 auch sowohl gegenüber der Wärmetauschereinheit 10 und dem Lüfter 20 beweglich sein, wobei die Leithülse 30 durch nicht dargestellte Federelemente von Seiten des Lüfters 20 federnd gegen die Stirnfläche 11 der Wärmetauschereinheit 10 gedrückt wird.

Der Radialspalt 2 wird dabei jeweils vollständig geschlossen, sodass die Rückströmung S durch den Radialspalt 2 im Wesentlichen vollständig blockiert bzw. unterdrückt wird.

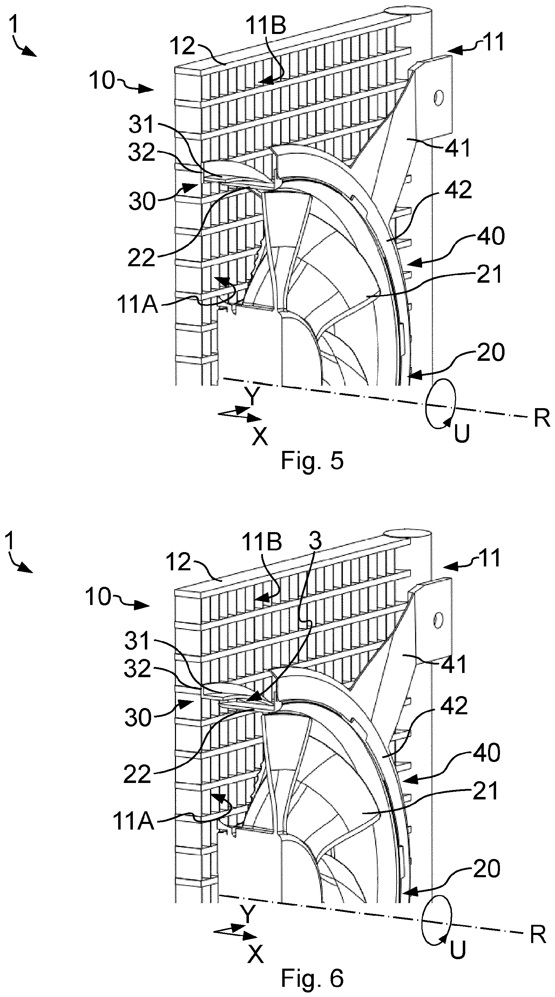

Die in Figur 5 dargestellte Variante unterscheidet sich nur dadurch von der in Figur 4 gezeigten Ausführung, dass die Leithülse 30 neben einer sich in Axialrichtung X erstreckenden und die Wandung 22 des Lüfters 20 in Umfangsrichtung U umschließenden bzw. umlaufenden Wandung 31 auch einen sich in Radialrichtung Y über die Wandung 31 der Leithülse 30 hinaus erstreckenden Flansch 32 aufweist, durch welchen die Anlagefläche der Leithülse 30 an die Stirnfläche 11 der Wärmetauschereinheit 10 vergrößert wird. Dabei erstreckt sich der Flansch 32 hier sowohl nach radialinnen als auch nach radialaußen über die Wandung 31 der Leithülse 30 hinaus, wobei auch nur eine Erstreckung nach radialaußen oder radialinnen vorgesehen sein kann.

Das ist in mehrfacher Hinsicht vorteilhaft. Wird die Leithülse 30 beispielsweise durch Kleben einteilig mit der Wärmetauschereinheit 10 bzw. der Stirnfläche verbunden, wird durch den Flansch 32 die Klebefläche und mithin die Stabilität der Verbindung erhöht. Ist die Leithülse 30 alternativ positionsfest mit dem Lüfter 20 verbunden, darf durch die auf der Stirnfläche 11 der Wärmetauschereinheit 10 aufliegende Leithülse 30 keine zu große Kraft bzw. kein zu großer Druck auf die Stirnfläche 11 wirken, da dadurch die Wärmetauschereinheit 10 beschädigt werden kann. Durch den Flansch 32 wird die Anlagefläche vergrößert und dadurch die Kraft auf eine größere Fläche verteilt und der Druck auf die Stirnfläche 11 bzw. auf die Wärmetauschereinheit 10 reduziert.

Auch bei der Variante gemäß Figur 6 weist die Leithülse 30 einen Flansch 32 auf, wobei der wesentliche Unterschied gegenüber der Ausführungsform der Figur 5 ist, dass die Leithülse 30 einen Innendurchmesser aufweist, welcher größer ist als ein Außendurchmesser der Wandung 22 des Lüfters 20, sodass die Leithülse 30 mit der Wandung 22 des Lüfters 20 zwar in Axialrichtung X abschnittsweise überlappt aber diese nicht aneinander anliegen und ein Axialspalt 3 zwischen ihnen gebildet ist. Dabei ist die Leithülse 30 vorzugsweise an der Wärmetauschereinheit 10 und beispielsweise durch Kleben an der Stirnfläche 11 der Wärmetauschereinheit 10 fixiert, sodass sich der Lüfter 20 durch den Axialspalt 3 zumindest entlang der Axialrichtung X frei gegenüber der Leithülse 30 bewegen kann. Eine Schwingung bzw. Vibration des Lüfters 20, welche eine Axialbewegung des Lüfters 20 verursacht, führt somit nicht oder nur bei sehr starken Schwingungen dazu, dass der Lüfter 20 oder die Leithülse 30 gegen die Stirnfläche 11 der Wärmetauschereinheit 10 gepresst werden und diese beschädigt wird. Wesentlich ist hierbei weiter, dass die durchströmbare Fläche des Axialspalts 3 kleiner ist als die durchströmbare Fläche des Radialspalts 2 zwischen Wärmetauschereinheit 10 und Lüfter 20, sodass die Rückströmung S zwar nicht vollständig unterbunden, jedoch minimiert wird.

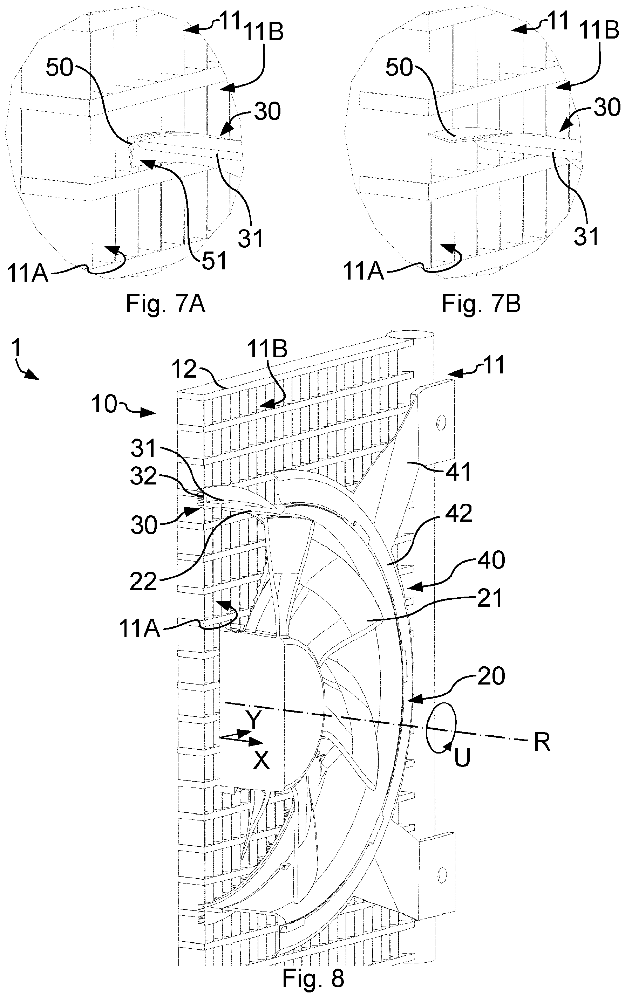

Die Figuren 7A und 7B zeigen einen vergrößerten Ausschnitt einer Variante, bei welcher ein verbleibender Spalt zwischen der Wandung 31 der Leithülse 30 und der Stirnfläche 11 durch ein in Axialrichtdung X elastisch deformierbares Dichtelement 50 verschließbar ist bzw. bei ausreichend starken Luftstrom automatisch verschlossen wird. Gemäß der in den Figuren 7A und 7B dargestellten Variante, ist die Leithülse 30 der Kühlvorrichtung einen Radialspalt zu der Wärmetauschereinheit 10 bzw. deren Stirnfläche 11 aufweisend angeordnet. Weiter ist ein Dichtelement 50 den Radialspalt verschließend zwischen der Leithülse 30 und der Wärmetauschereinheit 10 angeordnet, das als Balg bzw. balgartige Folie geformt ist. Das Dichtelement 50 weist ein in Axialrichtung X an der Leithülse 30 bzw. an der Wandung 31 der Leithülse 30 fixiertes erstes Ende sowie ein in Axialrichtung X gegenüberliegendes freies zweites Ende auf. Wird von dem Lüfter 20 keine Luftströmung bzw. eine Luftströmung kleiner einem vorbestimmten Grenzwert erzeugt, befindet sich das Dichtelement 50 in seiner in Figur 7A dargestellten Ausgangsstellung (erste Stellung). Dabei erstreckt sich das Dichtelement 50 mit einem Abschnitt 51 in den Strömungskanal der Luft von dem Luftauslass des Lüfters 20 zu der Stirnfläche 11 der Wärmetauschereinheit 10 und bildet dadurch einen Strömungswiderstand. Übersteigt die von dem Lüfter 20 erzeugte Luftströmung einen vorbestimm unteren Grenzwert, sodass eine durch die Luftströmung auf den Abschnitt 51 des Dichtelements 50 wirkende Kraft einen vorbestimmten Wert überschreitet, wird das Dichtelement 50 abhängig von der Luftströmung deformiert und in Axialrichtung X von seinem festen bzw. an der Leithülse 30 fixierten Ende zu seinem freien Ende gestreckt, sodass das Dichtelement 50 den Radialspalt vollständig oder zumindest teilweise verschließt, sobald die Luftströmung einen vorbestimmten oberen Grenzwert überschreitet. In Figur 7B ist das Dichtelement 50 in seiner zweiten vollständig deformierten bzw. gestreckten Stellung, in welcher es an der Stirnfläche 11 anliegt. Dabei ist zu beachten, dass die Deformation also die Streckung des Dichtelements 50 stärker ist, je größer die Luftströmung wird, sodass der Radialspalt in Abhängigkeit der von dem Lüfter 20 erzeugten Luftströmung geschlossen ist bzw. wird.

Das Dichtelement 50 ist balgartig ausgebildet, sodass das Dichtelement 50 bei einer Bewegung der Leithülse 30 zu der Stirnfläche 11 gestaucht wird und den Spalt weiter verschließt ohne eine die Wärmetauschereinheit 10 beschädigende Kraft auf die Stirnfläche 11 aufzubringen. Dabei ist in Figur 7A ein Zustand gezeigt, bei welchem das Dichtelement 50 im Wesentlichen undeformiert ist. In Figur 7B ist die Leithülse 30 in Axialrichtung X in Richtung der Stirnfläche 11 verschoben und das Dichtelement 50 entsprechend deformiert.

Figur 8 entspricht einer Variante gemäß Figur 5, wobei an einer zu der Stirnseite 11 weisenden Seite bzw. Fläche des Flansches 32 Borsten vorgesehen sind, welche in die Wärmetauschereinheit 10 bzw. hier den Kondensator 12 eindringen und den Flansch 32 dadurch bezüglich einer Bewegung parallel der Stirnfläche 11 an der Wärmetauschereinheit 10 fixieren.

## Patentansprüche

1. Kühlvorrichtung (1) mit einer von Luft durchströmbaren Wärmetauschereinheit (10) und zumindest einem unter Ausbildung eines Radialspalts (2) an der Wärmetauschereinheit (10) angeordneten Lüfter (20) zur Erzeugung einer Luftströmung durch die Wärmetauschereinheit (10),
wobei die Wärmetauschereinheit (10) eine zu dem Lüfter (20) weisende durchströmbare Stirnfläche (11) aufweist, welche abschnittsweise von dem Lüfter (20) abgedeckt ist, sodass die Stirnfläche (11) in eine zumindest abschnittsweise von dem Lüfter (20) abgedeckte erste Teilfläche(11A) und eine von dem Lüfter freie zweite Teilfläche (11B) geteilt ist,
wobei der Lüfter (20) ein Gehäuse aufweist, welches wärmetauscherseitig eine in Umfangsrichtung (U) umlaufende Wandung (22) aufweist, welche einen in Axialrichtung von Luft durchströmbaren Innenraum des Lüfters begrenzt,
**dadurch gekennzeichnet, dass**
die Kühlvorrichtung (1) eine Leithülse (30) aufweist, welche zwischen der Wärmetauschereinheit (10) und dem Lüfter (20) den Radialspalt (2) zumindest abschnittsweise verschließend angeordnet ist,
die Wandung (22) des Gehäuses mit der Leithülse (30) in Axialrichtung (X) überlappt, sodass die Leithülse (30) die Wandung (22) des Lüfters (20) in Umfangsrichtung (U) umläuft oder die Wandung (22) des Lüfters (20) die Leithülse (30) in Umfangsrichtung (U) umläuft,
einen von einem Luftauslass des Lüfters (20) zu der ersten Teilfläche (11A) der Stirnfläche (11) führenden Strömungskanal bildet und
den Luftauslass des Lüfters (20) strömungstechnisch mit der ersten Teilfläche (11A) der Stirnfläche (11) verbindet und strömungstechnisch von der zweiten Teilfläche (11B) trennt.

2. Kühlvorrichtung nach Anspruch 1,
wobei die Leithülse (30) hohlzylindrisch und/oder rotationssymmetrisch ausgebildet ist
und wobei die Leithülse (30) koaxial zu einer Rotationsachse (R) eines Laufrades (21) des Lüfters (20) angeordnet ist.

3. Kühlvorrichtung nach Anspruch 1 oder 2,
wobei die Leithülse (30) integral durch die Wärmetauschereinheit (10) gebildet wird oder einteilig mit dieser verbunden ist.

4. Kühlvorrichtung nach einem der Ansprüche 1 bis 3,
wobei die Leithülse (30) unmittelbar an dem Lüfter (20) anliegt oder einen Radialspalt zu dem Lüfter (20) aufweisend angeordnet ist oder einen Axialspalt (3) zu dem Lüfter (20) aufweisend angeordnet ist.

5. Kühlvorrichtung nach Anspruch 1 oder 2,
wobei die Leithülse (30) integral durch den Lüfter (20) gebildet wird oder einteilig mit diesem verbunden ist.

6. Kühlvorrichtung nach einem der Ansprüche 1, 2, 4 oder 5,
wobei die Leithülse (30) unmittelbar an der Wärmetauschereinheit (10) anliegt oder einen Radialspalt (2) zu der Wärmetauschereinheit (10) aufweisend angeordnet ist.

7. Kühlvorrichtung nach einem der Ansprüche 1, 2, 4 oder 5,
wobei die Leithülse (30) einen Radialspalt (2) zu der Wärmetauschereinheit (10) aufweisend angeordnet ist
und ein Dichtelement (50) den Radialspalt (2) verschließend zwischen der Leithülse (30) und der Wärmetauschereinheit (10) angeordnet ist.

8. Kühlvorrichtung nach dem vorhergehenden Anspruch,
wobei das Dichtelement (50) als ein Balg oder eine Schürze geformt ist,
ein in Axialrichtung (X) an der Leithülse (30) fixiertes erstes Ende sowie ein in Axialrichtung (X) gegenüberliegendes, freies zweites Ende aufweist,
und ausgebildet ist, von der durch den Lüfter (20) erzeugten Luftströmung in Axialrichtung (X) aus einer undeformierten ersten Stellung in eine deformierte zweite Stellung gestreckt zu werden, sodass der Radialspalt (2) in der zweiten Stellung insbesondere vollständig geschlossen ist.

9. Kühlvorrichtung nach einem der vorhergehenden Ansprüche,
wobei die Leithülse (30) formstabil und insbesondere starr ist.

10. Kühlvorrichtung nach einem der vorhergehenden Ansprüche,
wobei die Leithülse (30) eine in Umfangsrichtung (U) umlaufende Wandung (31) und wärmetauscherseitig und/oder lüfterseitig einen sich in Radialrichtung (Y) über die Wandung (31) hinaus erstreckenden Flansch (32) aufweist.

11. Kühlvorrichtung nach dem vorhergehenden Anspruch,
wobei der Flansch (32) zu der Stirnseite (11) hin ein Deformationselement und/oder eine Vielzahl von Borsten aufweist, durch welche der Flansch (32) ausgebildet ist, durch die Stirnfläche (11) in die Wärmetauschereinheit (10) einzudringen.

12. Kühlvorrichtung nach einem der vorhergehenden Ansprüche,
wobei eine Rotationsachse (R) eines Laufrades (21) des Lüfters (20) koaxial zu einer zu der Stirnfläche (11) orthogonalen Mittelachse der Wärmetauschereinheit (10) ist, welche mittig durch die Stirnfläche (11) verläuft.

13. Kühlvorrichtung nach einem der vorhergehenden Ansprüche,
ferner aufweisend ein Lüfter-Halteelement (40), welches ausgebildet ist, den Lüfter (20) gegenüber der Wärmetauschereinheit (10) positionsfest zu fixieren.

## Claims

1. A cooling device (1) with a heat exchanger unit (10) through which air can flow and at least one fan (20) that is arranged on the heat exchanger unit (10), forming a radial gap (2) for generating an airflow through the heat exchanger unit (10),
wherein the heat exchanger unit (10) has a front face (11) through which air can flow which points toward the fan (20) and which is covered in portions by the fan (20), so that the front face (11) is divided into a first subface (11A) that is at least partially covered by the fan (20) and a second subface (11B) that is free of the fan,
wherein the fan (20) has a housing having a wall (22) on the heat exchanger side which extends in the circumferential direction (U), said wall delimiting an interior of the fan through which air can flow in the axial direction
**characterized in that**
the cooling device (1) has a guide sleeve (30) which is arranged between the heat exchanger unit (10) and the fan (20) so as to close the radial gap (2) at least in portions,
the wall (22) overlaps with the guide sleeve (30) in the axial direction (X), so that the guide sleeve (30) covers the wall (22) of the fan (20) in the circumferential direction (U) or the wall (22) of the fan (20) extends around the guide sleeve (30) in the circumferential direction (U),
forms a flow channel leading from an air outlet of the fan (20) to the first subface (11A) of the front face (11), and
fluidically connects the air outlet of the fan (20) to the first subface (11A) of the front face (11) and fluidically separates the same from the second subface (11B).

2. The cooling device as set forth in claim 1,
wherein the guide sleeve (30) is embodied as a hollow cylinder and/or is rotationally symmetrical,
and wherein the guide sleeve (30) is arranged coaxially with an axis of rotation (R) of an impeller (21) of the fan (20).

3. The cooling device as set forth in claim 1 or 2,
wherein the guide sleeve (30) is formed integrally by the heat exchanger unit (10) or is connected thereto in a single piece.

4. The cooling device as set forth in one of claims 1 to 3,
wherein the guide sleeve (30) rests directly against the fan (20) or is arranged with a radial gap relative to the fan (20) or is arranged with an axial gap (3) relative to the fan (20).

5. The cooling device as set forth in claim 1 or 2,
wherein the guide sleeve (30) is formed integrally by the fan (20) or is connected thereto in a single piece.

6. The cooling device as set forth in one of claims 1, 2, 4 or 5,
wherein the guide sleeve (30) rests directly against the heat exchanger unit (10) or is arranged with a radial gap (2) relative to the heat exchanger unit (10).

7. The cooling device as set forth in one of claims 1, 2, 4 or 5,
wherein the guide sleeve (30) is arranged with a radial gap (2) relative to the heat exchanger unit (10)
and a sealing element (50) which closes the radial gap (2) is arranged between the guide sleeve (30) and the heat exchanger unit (10).

8. The cooling device as set forth in the preceding claim,
wherein the sealing element (50) is embodied as a bellows or skirt,
has a first end that is secured in the axial direction (X) to the guide sleeve (30) and a free second end that is oppositely situated in the axial direction (X)
and is designed to be stretched by the airflow generated by the fan (20) in the axial direction (X) from a non-deformed first position into a deformed second position, so that the radial gap (2) is particularly completely closed in the second position.

9. The cooling device as set forth in one of the preceding claims,
wherein the guide sleeve (30) is dimensionally stable and particularly rigid.

10. The cooling device as set forth in one of the preceding claims,
wherein the guide sleeve (30) has a wall (31) that extends around in the circumferential direction (U) and a flange (32) that extends beyond the wall (31) in the radial direction (Y) on the heat exchanger side and/or fan side.

11. The cooling device as set forth in the preceding claim,
wherein the flange (32) has a deformation element and/or a plurality of bristles toward the front face (11) by means of which the flange (32) is designed to penetrate through the front face (11) into the heat exchanger unit (10).

12. The cooling device as set forth in one of the preceding claims,
wherein an axis of rotation (R) of an impeller (21) of the fan (20) is coaxial with a central axis of the heat exchanger unit (10), which is orthogonal to the front face (11) and extends centrally through the front face (11).

13. The cooling device as set forth in one of the preceding claims,
further comprising a fan holding element (40) that is designed to secure the fan (20) in a fixed position relative to the heat exchanger unit (10).

## Revendications

1. Dispositif de refroidissement (1) comprenant une unité d'échangeur de chaleur (10) pouvant être traversée par l'air et au moins un ventilateur (20) disposé sur l'unité d'échangeur de chaleur (10) pour former un espace radial (2) destiné à générer un flux d'air à travers l'unité d'échangeur de chaleur (10),
l'unité d'échangeur de chaleur (10) présentant une surface frontale d'écoulement (11) tournée vers le ventilateur (20), qui est partiellement recouverte par le ventilateur (20), de sorte que la surface frontale (11) est divisée en une première surface partielle (11A) recouverte au moins partiellement par le ventilateur (20) et une deuxième surface partielle (11B) exempte du ventilateur,
le ventilateur (20) présentant un boîtier qui présente, du côté de l'échangeur de chaleur, une paroi (22) s'étendant dans la direction circonférentielle (U), qui délimite un espace intérieur du ventilateur pouvant être traversé par l'air dans la direction axiale,
**caractérisé en ce que**
le dispositif de refroidissement (1) présente un manchon de guidage (30) qui est disposé entre l'unité d'échangeur de chaleur (10) et le ventilateur (20) de manière à fermer l'espace radial (2) au moins par sections,
la paroi (22) du boîtier chevauche le manchon de guidage (30) dans la direction axiale (X) de sorte que le manchon de guidage (30) s'étend autour de la paroi (22) du ventilateur (20) dans la direction circonférentielle (U) ou que la paroi (22) du ventilateur (20) s'étend autour du manchon de guidage (30) dans la direction circonférentielle (U),
un canal d'écoulement mène d'une sortie d'air du ventilateur (20) à la première surface partielle (11A) de la face d'extrémité (11) et
la sortie d'air du ventilateur (20) est reliée fluidiquement à la première surface partielle (11A) de la face d'extrémité (11) et la sépare fluidiquement de la deuxième surface partielle (11B).

2. Dispositif de refroidissement selon la revendication 1,
dans lequel le manchon de guidage (30) est cylindrique creux et/ou symétrique en rotation et dans lequel le manchon de guidage (30) est disposé coaxialement à un axe de rotation (R) d'une roue à aubes (21) du ventilateur (20).

3. Dispositif de refroidissement selon la revendication 1 ou 2,
dans lequel le manchon de guidage (30) est formé d'un seul tenant par l'unité d'échangeur de chaleur (10) ou est relié d'un seul tenant à celle-ci.

4. Dispositif de refroidissement selon l'une quelconque des revendications 1 à 3,
dans lequel le manchon de guidage (30) repose directement contre le ventilateur (20) ou est disposé de manière à présenter un espace radial par rapport au ventilateur (20) ou est disposé de manière à présenter un espace axial (3) par rapport au ventilateur (20).

5. Dispositif de refroidissement selon la revendication 1 ou 2,
dans lequel le manchon de guidage (30) est formé d'un seul tenant par le ventilateur (20) ou est relié d'un seul tenant à celui-ci.

6. Dispositif de refroidissement selon l'une quelconque des revendications 1, 2, 4 ou 5,
dans lequel le manchon de guidage (30) est directement en contact avec l'unité d'échange de chaleur (10) ou est disposé de manière à présenter un espace radial (2) par rapport à l'unité d'échange de chaleur (10).

7. Dispositif de refroidissement selon l'une quelconque des revendications 1, 2, 4 ou 5,
dans lequel le manchon de guidage (30) est disposé de manière à présenter un espace radial (2) par rapport à l'unité d'échangeur de chaleur (10) et un élément d'étanchéité (50) est disposé entre le manchon de guidage (30) et l'unité d'échangeur de chaleur (10) pour fermer l'espace radial (2).

8. Dispositif de refroidissement selon l'une quelconque des revendications précédentes,
dans lequel l'élément d'étanchéité (50) est conformé en soufflet ou en tablier, présente une première extrémité fixée au manchon de guidage (30) dans la direction axiale (X) et une deuxième extrémité libre opposée dans la direction axiale (X),
et est conçu pour être étiré par le flux d'air généré par le ventilateur (20) dans la direction axiale (X) d'une première position non déformée à une deuxième position déformée, de sorte que l'espace radial (2) est en particulier complètement fermé dans la deuxième position.

9. Dispositif de refroidissement selon l'une quelconque des revendications précédentes,
dans lequel le manchon de guidage (30) est indéformable et en particulier rigide.

10. Dispositif de refroidissement selon l'une quelconque des revendications précédentes,
dans lequel le manchon de guidage (30) présente une paroi (31) s'étendant dans la direction circonférentielle (U) et, côté échangeur de chaleur et/ou côté ventilateur, une bride (32) s'étendant au-delà de la paroi (31) dans la direction radiale (Y).

11. Dispositif de refroidissement selon l'une quelconque des revendications précédentes,
dans lequel la bride (32) présente vers la surface frontale (11) un élément de déformation et/ou une pluralité de poils, au moyen desquels la bride (32) est conçue pour pénétrer à travers la surface frontale (11) dans l'unité d'échangeur de chaleur (10).

12. Dispositif de refroidissement selon l'une quelconque des revendications précédentes,
dans lequel un axe de rotation (R) d'une roue à aubes (21) du ventilateur (20) est coaxial à un axe central de l'unité d'échangeur de chaleur (10) qui est orthogonal à la surface frontale (11) et traverse centralement la surface frontale (11).

13. Dispositif de refroidissement selon l'une des revendications précédentes,
comprenant en outre un élément de maintien de ventilateur (40) qui est conçu pour fixer le ventilateur (20) dans une position fixe par rapport à l'unité d'échangeur de chaleur (10).
